Europäisches Patentamt

European Patent Office

Office européen des brevets

(19)

(11) **EP 0 707 193 A2**

(12) **EUROPÄISCHE PATENTANMELDUNG**

(43) Veröffentlichungstag:
**17.04.1996  Patentblatt 1996/16**

(51) Int. Cl.⁶: **G01C 9/06**, **H01H 35/02**,
**B62D 49/08**, **B60R 21/00**

(21) Anmeldenummer: **95115745.2**

(22) Anmeldetag: **06.10.1995**

(84) Benannte Vertragsstaaten:
**DE ES FR GB IT SE**

(30) Priorität: **12.10.1994 DE 4436379**

(71) Anmelder: **TEMIC TELEFUNKEN microelectronic GmbH**
**D-74072 Heilbronn (DE)**

(72) Erfinder:
• **Baur, Richard**
**D-85276 Pfaffenhofen (DE)**

• **Hora, Peter**
**D-86529 Schrobenhausen (DE)**
• **Schiffl, Heinz**
**D-80935 München (DE)**
• **Spies, Hans**
**D-85276 Pfaffenhofen (DE)**
• **Wetzel, Guido**
**D-86633 Neuburg (DE)**

(74) Vertreter: **Maute, Hans-Jürgen, Dipl.-Ing.**
**TEMIC TELEFUNKEN microelectronic GmbH**
**Postfach 35 35**
**D-74025 Heilbronn (DE)**

(54) **Sensoranordnung zur Neigungsdetektierung**

(57)    Die Erfindung betrifft eine Sensoranordnung zur Detektion der Neigung der Anordnung gegenüber der Horizontalrichtung, bestehend aus wenigstens zwei Sensorelementen mit jeweils einer Hauptempfindlichkeitsachse, wobei die Sensorelemente derart angeordnet sind, daß deren Hauptempfindlichkeitsachse in der durch die zu detektierenden Neigungswinkeln definierten Ebene liegen und jeweils einen Winkel zu einer Bezugsebene der Anordnung bilden, die den zu detektierenden Neigungswinkeln entsprechen. Die Sensorelemente erzeugen jeweils in Abhängigkeit des Neigungswinkels der Bezugsebene gegenüber der Horizontalrichtung ein Sensorsignal. Zur Detektierung weiterer Neigungswinkel in der gleichen Ebene können mehrere Sensorpaare angeordnet sein, wobei für jede Neigungsebene wenigstens zwei Sensorelemente vorzusehen sind. Als Sensorelemente kommen Beschleunigungssensoren, sog. G-Sensoren oder kapazitive Beschleunigungsaufnehmer in Frage. Die Sensoranordnung findet ihre Verwendung in einem Land- oder Seefahrzeug, in einem Flugzeug oder in einem Kran.

FIG.1

**Beschreibung**

Die Erfindung betrifft eine Sensoranordnung zur Neigungsdetektierung gemäß dem Oberbegriff des Patentanspruchs 1 und dessen Verwendung in einem Fahr- oder Flugzeug, insbesondere zur Überschlagserkennung bei einem Fahrzeug.

Um eingebaute Sicherheitseinrichtungen in einem Kraftfahrzeug auszulösen, insbesondere einen Überrollbügel, sind Beschleunigungs- oder Neigungssensoren eingebaut, um einen kritischen Neigungswinkel, den sog. Kippwinkel, oder auch den schwerelosen Zustand des Fahrzeugs erkennen zu können. Als "kritischen Neigungswinkel" oder "Kippwinkel" wird derjenige Winkel bezeichnet, den ein Fahrzeug dann einnimmt, wenn es gerade umzukippen beginnt.

In der Patentschrift DE 41 14 992 C1 wird ein solcher Beschleunigungs- und Neigungssensor beschrieben, der auch den Schwebefall erkennen kann, wozu in einem Sensorgehäuse konusförmig mit der Spitze nach unten ein Hohlraum ausgebildet ist, an dessen Innenfläche Kontaktstücke angeordnet sind. In diesem Hohlraum befindet sich ein lageveränderlicher Kontaktkörper, in der Regel ein Quecksilbertropfen, dessen Lage der Fahrzeugneigung entspricht und dessen Gestalt sich bei Annäherung an die Schwerelosigkeit von linsenförmig nach kugelförmig verändert. Nachteilig ist bei diesem Sensor, daß aufgrund der vielen, an der Hohlraum-Innenfläche angeordneten Kontaktstücke zum einen ein sehr toleranzarmer und damit teurer Herstellungsprozeß und zum anderen eine sehr aufwendige und dadurch ebenfalls teure Auswerteschaltung erforderlich ist. Zudem handelt es sich bei dem meistens verwendeten Quecksilber um ein giftiges Schwermetall, dessen Einsatz aus Umweltschutzgründen vermieden werden sollte.

Den in der Offenlegungsschrift DE 38 15 938 A1 beschriebenen Beschleunigungssensor kennzeichnet eine Röhren-Libelle als Gehäuse, die relativ zu der zu bestimmenden Beschleunigung ausgebildet ist und bei dem durch einen Detektor, der auf eine definierte Lage eines Anzeigemediums (Luftblase) innerhalb einer Flüssigkeit in der Röhren-Libelle anspricht, die das Anzeigemedium (Luftblase) bei dem zu detektierenden Beschleunigungswert annimmt. Jedoch ist im schwerelosen Zustand, beispielsweise bei einem Fahrzeug mit verringertem oder nicht mehr vorhandenem Bodenkontakt, die auf der Gravitationskraft beruhende Bewegung des Anzeigemediums (Luftblase) in der Röhren-Libelle nicht mehr detektierbar. Das bedeutet, daß im schwerelosen Zustand, beispielsweise nach Überfahren einer Schwelle und anschließendem freien Flug, eine kritische Situation nicht erkannt und deshalb Sicherheitseinrichtungen, insbesondere der Überrollbügel, nicht aktiviert werden.

Bekannt sind auch solche Anordnungen, bei denen die bereits erwähnte Röhren-Libelle mit einem in der Offenlegungsschrift DE 40 03 360 A1 beschriebenen und als "G-Sensor" bezeichneten Beschleunigungssensor kombiniert werden, was allerdings einen erheblichen Aufwand an Sensorik und Auswertung erfordert. Mit Hilfe eines solchen G-Sensors, der zur Existenzbestimmung einer konstanten Beschleunigung dient, in diesem Fall der Erdbeschleunigung, läßt sich mit geringem mechanischem Aufwand feststellen, daß sich beispielsweise ein Fahrzeug allein unter dem Einfluß der Erdbeschleunigung bewegt. Es ist hingegen nicht möglich, mit Hilfe eines einzigen, derartigen Beschleunigungssensors den kritischen Neigungswinkel, beispielsweise eines Fahrzeugs, festzustellen.

Es ist daher Aufgabe der Erfindung, eine effektive und kostengünstige Sensoranordnung der eingangs genannten Art anzugeben.

Diese Aufgabe wird durch eine Sensoranordnung gemäß den kennzeichnenden Merkmalen des Patentanspruchs 1 gelöst, wonach die Sensoranordnung aus wenigstens zwei Sensorelementen besteht und diese derart angeordnet sind, daß ihre Hauptempfindlichkeitsachsen in der durch die zu detektierenden Neigungswinkeln definierten Ebene (Neigungsebene) liegen und jeweils einen Winkel zu einer Bezugsebene der Anordnung bilden, die den zu detektierenden Neigungswinkeln entsprechen. Die Sensorelemente erzeugen jeweils in Abhängigkeit des Neigungswinkels der Bezugsebene gegenüber der Horizontalrichtung ein Sensorsignal.

Die mit der Erfindung erzielten Vorteile bestehen insbesondere darin, daß mit einem einfachen mechanischen Aufbau ohne Verwendung von Quecksilber und einer wenig anspruchsvollen Auswertung der schwerelose Zustand eindeutig festgestellt werden kann oder wenn sich beispielsweise ein Fahrzeug im statisch kritischen Neigungswinkel befindet und umzukippen droht.

Die Erfindung wird im weiteren anhand eines Ausführungsbeispiels erläutert und in den Figuren dargestellt. Es zeigen:

Figur 1    ein Kraftfahrzeug mit einem G-Sensorpaar in waagerechter Lage,

Figur 2    die Anordnung aus Figur 1 in rechter Kipplage und

Figur 3    die Anordnung aus Figur 1 in linker Kipplage.

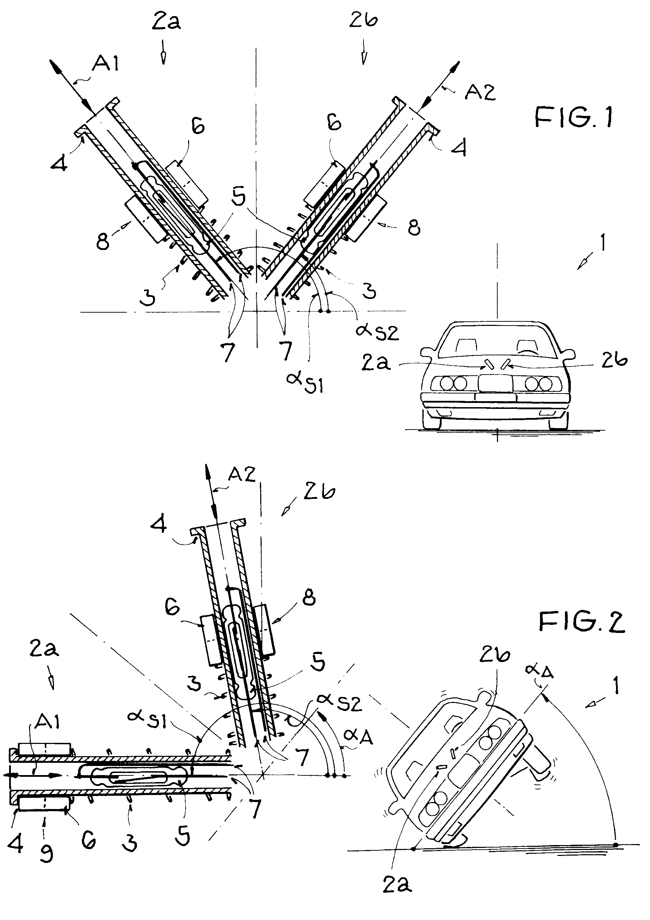

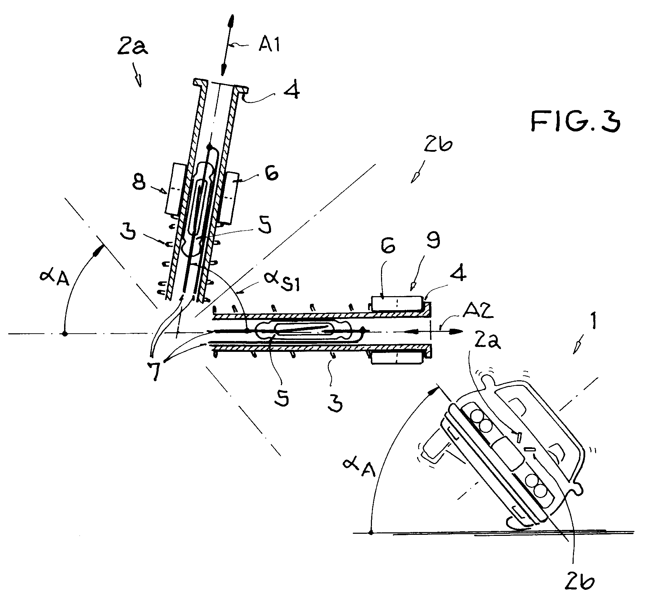

Das Ausführungsbeispiel in Figur 1 zeigt ein Fahrzeug 1, bei dem zwei G-Sensoren 2 derart angeordnet sind, daß die Ebene durch ihre jeweilige Hauptempfindlichkeitsachse A1, A2 senkrecht auf der Fahrzeuglängsachse steht; demnach verläuft die zu überwachende Kippachse des Fahrzeugs in diesem Fall parallel zur Fahrtrichtung. Jeder G-Sensor 2 ist mit seiner Hauptempfindlichkeitsachse A1, A2 in einem solchen Winkel zur Waagerechten angeordnet, der dem Kippwinkel des Fahrzeugs 1 entspricht, in diesem Fall z. B. 50°. Die Figuren 2 und 3 zeigen, daß bei einer solchen Anordnung der linke bzw. rechte G-Sensor 2 genau dann waagerecht liegt, wenn sich das Fahrzeug 1 in der linken bzw. rechten Kipplage befindet.

Ein G-Sensor 2 eines Sensorpaars besteht dabei im wesentlichen aus Druckfeder 3, oberem Anschlag 4, Reed-Kontakt 5, magnetischem Massekörper 6 und Anschlußkontakten 7. Der Neigungswinkel, den ein Fahrzeug 1 zum waagerechten Untergrund einnimmt, ist mit $\alpha_A$ bezeichnet, der Winkel zwischen der Hauptempfindlichkeitachse A1 des ersten G-Sensors 2a und der Waagerechten mit $\alpha_{S1}$ und der Winkel zwischen der Hauptempfindlichkeitsachse A2 des zweiten G-Sensors 2b und der Waagerechten mit $\alpha_{S2}$.

Bei waagerechtem Stand des Fahrzeugs 1 sollen diese Winkel folgende Wert annehmen: $\alpha_A = 0°$, $\alpha_{S1} = 130°$, $\alpha_{S2} = 50°$. Besitzt ein G-Sensor folgende Kenngrößen: Masse des magnetischen Massekörpers 6: m = 0,02 kg, Richtgröße der Druckfeder 3: D = 4 N/m und Reibungskoeffizient des magnetischen Massekörpers 6: $\mu$ = 0,2, so ergibt sich für jeden G-Sensor 2 des magnetischen Massekörpers 6 ein Abstand von

$$s_0 \, (50°) = s_0 \, (130°) = 0,031 \text{ m (Nullage)},$$

gemessen vom Anschlag 4.

Befindet sich das Fahrzeug 1, wie in Figur 2 gezeigt, in der sog. rechten Kipplage, gilt für die drei genannten Winkel:

$$\alpha_A = 50°, \; \alpha_{S1} = 180°, \; \alpha_{S2} = 100° \text{ (rechte Kipplage).}$$

Bei gleichen Kenngrößen der G-Sensoren 2 ergibt sich für den magnetischen Massekörper 6 des G-Sensors 2a ein Abstand von nur noch

$$s_1 \, (180°) = 0,01 \text{ m}$$

zum Anschlag 4, da die Gravitationskraft in diesem Fall senkrecht zur Hauptempfindlichkeitsachse A1 des G-Sensors 2a wirkt und deshalb keinen Einfluß auf die Stellung des magnetischen Massekörpers 6 hat. Analog gilt für die in Figur 3 gezeigte linke Kipplage des Fahrzeugs 1:

$$\alpha_A = -50°, \; \alpha_{S1} = 80°, \; \alpha_{S2} = 0° \text{ (linke Kipplage)}$$

und es ergibt sich für den magnetischen Massekörper 6 des G-Sensors 2b ein Abstand von ebenfalls

$$s_2 \, (0°) = 0,01 \text{ m}$$

zum Anschlag 4. Bei rechter bzw. linker Kipplage des Fahrzeugs 1 besteht zwischen der Waagerechten und der Hauptempfindlichkeitsachse A2 bzw. A1 des G-Sensors 2b bzw. 2a ein Winkel von $\alpha_{S2} = 100°$ bzw. $\alpha_{S1} = 80°$ und es ergibt sich für den jeweiligen magnetischen Massekörper 6 ein Abstand von

$$s_1 \, (80°) = s_2 \, (100°) = 0,05 \text{ m}$$

zum Anschlag 4.

Somit ergibt sich, daß jeder derart angeordnete G-Sensor 2 wenigstens an derjenigen Stelle einen ersten Schaltpunkt 9 besitzen muß, die der magnetische Massekörper 6 in waagerechter Position des betreffenden G-Sensors einnimmt, da spätestens bei dieser Position des jeweiligen Massekörpers 6 beispielsweise ein Überrollbügel ausgelöst werden muß. Für die Realisierung dieses Schaltpunktes bietet sich vorteilhaft ein Mikroschalter an. Eine derartige Anordnung der G-Sensoren 2 ist systemimmanent, wenn in der oben beschriebenen Nullage ($\alpha_{S1} = 130°$, $\alpha_{S2} = 50°$) des magnetischen Massekörpers 6 eines G-Sensors 2 ein zweiter Schaltpunkt 8 angeordnet ist, realisiert z. B. durch den Reed-Kontakt 5; das bedeutet, daß unter Einwirkung der Schwerkraft, wenn also das Fahrzeug 1 noch Bodenkontakt hat, die linke oder rechte Kipplage eindeutig erkannt wird oder der schwerelose Zustand, wenn das Fahrzeug 1 "abgehoben" und keinen Kontakt zum Boden mehr hat, detektiert werden kann.

Wird die Sensoranordnung beispielsweise in einem Kraftfahrzeug als Überschlagssensor zur Auslösung eines Überrollbügels eingesetzt, so gibt bei einem schnell ablaufenden Überschlag der sich mit seiner Hauptempfindlichkeitsachse A1, A2 in fast waagerechter Position befindliche G-Sensor 2a, 2b früher ein Ausgangssignal ab, als dies bei einem langsam ablaufenden Überschlag der Fall ist. Der Grund hierfür ist die durch die Drehbewegung zusätzlich auf den betreffenden Massekörper 6 einwirkende Zentripetalbeschleunigung in Richtung der betreffenden Hauptempfindlichkeitsachse A1 oder A2. Dadurch wirkt zusätzlich zur Federkraft und in gleicher Richtung eine Zentripetalkraft auf den Massekörper 6, die diesen beschleunigt und schneller die Schaltpunkte 8, 9 erreichen läßt.

Die Erfahrung hat jedoch gezeigt, daß es der Sicherheit der Fahrzeuginsassen dient, wenn bei einem schnell ablaufenden Überschlag beispielsweise der Überrollbügel früher als bei einem langsam ablaufenden Überschlag ausgelöst wird.

Die Sensoranordnung findet ihre Verwendung hauptsächlich in Bau- und Landfahrzeugen oder -bearbeitungsmaschinen, die bei Geländefahrten häufig Strecken mit extrem großem Gefälle, mit extrem großer Steigung oder in extremer Schräglage überwinden müssen und der Bediener gewarnt werden muß, wenn das Fahrzeug eine derartige Schräglage einnimmt, daß es zu kippen droht. Auch bei Flugzeugen ist der Einsatz einer derartigen Sensoranordnung denkbar, wo z. B. eine Flugrichtungsänderung durch eine Schräglage des Flugzeugs herbeigeführt wird. Ein Kurswechsel kann mit Hilfe einer derartigen Sensoranordnung so durchgeführt werden, daß sich das Flugzeug nur wenig zur Seite neigt und sich die Insassen nicht anzuschnallen brauchen bzw. keine Gegenstände ins Rutschen kommen.

Die beschriebene Sensoranordnung kann auch in Schiffen eingesetzt werden, um z. B. bei Frachtschiffen die Besatzung rechtzeitig zu warnen, bevor die Ladung verrutscht, so daß entsprechende Gegenmaßnahmen ergriffen werden können.

Ein weiteres Anwendungsgebiet der Sensoranordnung sind Krane wie z. B. Turmdrehkrane, Säulenkrane oder auch hydraulische Autokrane. Für diesen Anwendungsfall ist diejenige Ausführung der Erfindung besonders geeignet, bei der für eine Neigungsebene mehrere einzelne Sensoren unter verschiedenen Winkeln zur Horizontalen angeordnet sind, so daß entsprechend viele Neigungswinkel, beispielsweise eines Kranauslegers, detektiert werden können. Das sich durch eine gehobene Last einstellende Moment führt zu einer bestimmten Neigung des gesamten Krans oder des Auslegers, die dem Bediener beispielsweise über ein optisches Display angezeigt wird. Eine vorteilhafte Ausführungsform dieser Anwendung beendet automatisch einen Hubvorgang sicherheitshalber noch bevor die Last schwebt, wenn ein voreingestelltes Moment überschritten wird, um den Kran vor Beschädigungen zu schützen oder ihn vor dem Umkippen zu bewahren.

**Patentansprüche**

1. Sensoranordnung zur Detektion der Neigung der Anordnung gegenüber der Horizontalrichtung, bestehend aus wenigstens einem Sensorelement (2) mit jeweils einer Hauptempfindlichkeitsachse (A), gekennzeichnet durch folgende Merkmale:

   a) die Sensoranordnung besteht aus wenigstens zwei Sensorelementen (2a, 2b),

   b) die Sensorelemente (2a, 2b) sind derart angeordnet, daß deren Hauptempfindlichkeitsachsen (A1, A2) in der durch die zu detektierenden Neigungswinkeln ($\alpha_{S1}$, $\alpha_{S2}$) definierten Ebene (Neigungsebene) liegen und jeweils einen Winkel zu einer Bezugsebene der Anordnung bilden, die den zu detektierenden Neigungswinkeln ($\alpha_{S1}$, $\alpha_{S2}$) entsprechen,

   c) die Sensorelemente (2a, 2b) erzeugen jeweils in Abhängigkeit des Neigungswinkels der Bezugsebene gegenüber der Horizontalrichtung ein Sensorsignal.

2. Sensoranordnung nach Anspruch 1, dadurch gekennzeichnet, daß zur Detektierung mehrerer Neigungswinkel ($\alpha_S$) in einer Neigungsebene mehrere Sensorpaare (2) angeordnet sind.

3. Sensoranordnung nach Anspruch 1 oder Anspruch 2, dadurch gekennzeichnet, daß für mehrere Neigungsebenen jeweils wenigstens zwei Sensorelemente (2) vorgesehen sind.

4. Sensoranordnung nach einem der vorangehenden Ansprüche, dadurch gekennzeichnet, daß als Sensorelemente (2) Beschleunigungssensoren, sog. G-Sensoren, vorgesehen sind.

5. Sensoranordnung nach einem der vorangehenden Patentansprüche, dadurch gekennzeichnet, daß als Sensorelemente (2) kapazitive Beschleunigungssensoren vorgesehen sind.

6. Sensoranordnung nach Patentanspruch 4, dadurch gekennzeichnet, daß die Beschleunigungssensoren (2) wenigstens zwei Schaltpunkte (8, 9) besitzen.

7. Sensoranordnung nach Patentanspruch 6, dadurch gekennzeichnet, daß in einer ersten Kontaktstellung (8) eines magnetischen Massekörpers (6) ein Reed-Schalter (5) betätigt wird.

8. Sensoranordnung nach Anspruch 6 oder 7, dadurch gekennzeichnet, daß in einer zweiten Kontaktstellung (9) eines magnetischen Massekörpers (6) ein Mikroschalter betätigt wird.

9. Sensoranordnung nach Anspruch 8, dadurch gekennzeichnet, daß der Mikroschalter als Endschalter ausgeführt ist.

10. Sensoranordnung nach einem der vorangehenden Ansprüche, dadurch gekennzeichnet, daß die Sensoranordnung in einem Land- oder Seefahrzeug, oder in einem Flugzeug verwendet wird.

11. Sensoranordnung nach einem der Ansprüche 1 bis 9, dadurch gekennzeichnet, daß die Sensoranordnung in einem Kran verwendet wird.

FIG.1

FIG.2

FIG.3